# EUROPÄISCHE PATENTSCHRIFT

(11) **EP 1 516 222 B1**
(45) Veröffentlichungstag und Bekanntmachung des Hinweises auf die Patenterteilung: **09.11.2005**
(21) Anmeldenummer: 03761404.7
(22) Anmeldetag: 28.05.2003
(51) Int. Cl.: G02F 1/13363

(54) **DSTN-ANZEIGE MIT ELEKTROMAGNETISCHER SCHIRMUNG**
DSTN DISPLAY WITH ELECTROMAGNETIC SHIELDING
AFFICHAGE NEMATIQUE EN DOUBLE HELICE AVEC PROTECTION ELECTROMAGNETIQUE

(30) Priorität: 26.06.2002 DE 10228591
(43) Veröffentlichungstag der Anmeldung: 23.03.2005
(73) Patentinhaber: SIEMENS AKTIENGESELLSCHAFT, 80333 München (DE)
(72) Erfinder: BRANDT, Peter, 63739 Aschaffenburg (DE); NEHM, Georg, 63843 Niedernberg (DE); PAULSEN, Werner, 63739 Aschaffenburg (DE); WENNING, Jürgen, 63814 Mainaschaff (DE)
(86) Internationale Anmeldenummer: PCT/DE2003/001750
(87) Internationale Veröffentlichungsnummer: WO 2004/003648

(56) Entgegenhaltungen:
- DE-A- 19 848 010
- US-A- 5 148 299
- US-A- 5 265 273
- US-A1- 2002 008 824
- PATENT ABSTRACTS OF JAPAN vol. 015, no. 382 (P-1257), 26. September 1991 (1991-09-26) & JP 03 153212 A (HITACHI LTD), 1. Juli 1991 (1991-07-01)
- PATENT ABSTRACTS OF JAPAN vol. 2000, no. 22, 9. März 2001 (2001-03-09) & JP 2001 147441 A (NEC CORP), 29. Mai 2001 (2001-05-29)

## Beschreibung

Die Erfindung betrifft eine DSTN-Anzeige mit elektromagnetischer Schirmung. Die aktiven Zellen weisen zwei transparente Scheiben (beispielsweise aus Glas- oder Kunststoff) auf, die im Abstand zueinander angeordnet sind. Auf den Oberflächen der einander zugeordneten Seiten der Scheiben sind transparente Elektroden angebracht, zwischen denen eine Flüssigkristallsubstanz angeordnet ist. Die Flüssigkristallsubstanz verändert je nach der angelegten Spannung die Polarisationsebene des die Flüssigkristallsubstanz durchdringenden Lichtes. Im Strahlengang, des die Flüssigkristallzelle durchdringenden Lichtes sind außerhalb des Flüssigkristalls insgesamt zwei Polfilter angeordnet, die Licht nur in eine Polarisationsebene durchlassen. So werden je nach Lage der Polfilter zueinander und Ansteuerung der Elektroden die Lichtstrahlen durchgelassen oder gesperrt, so dass ein entsprechend angesteuerter Bildpunkt der Anzeige dunkel oder hell erscheint.

Die Verbesserung der Bildqualität ist bei DSTN-Zellen im Strahlengang des Lichtes noch eine passive Zelle angeordnet, bei der zwischen zwei transparenten Scheiben ebenfalls eine Flüssigkristallsubstanz angeordnet ist, die im Gegensatz zur Flüssigkristallsubstanz der aktiven Zelle eine umgekehrte Modularausrichtung aufweist.

Bei der Ansteuerung der einzelnen Bildpunkte entstehen infolge der hohen dabei auftretenden Ansteuerfrequenzen elektromagnetische Störungen, die ungehindert nach außen dringen können, wenn keine Gegenmaßnahmen getroffen werden. Weiterhin kann insbesondere beim Einsatz in Kraftfahrzeugen bei einem Benutzer des Kraftfahrzeugs durch Reibungen zwischen der Kleidung des Benutzers und Bezugsstoffen der Kraftfahrzeugsitze oder der Sicherheitsgurte des Kraftfahrzeugs der Benutzer auf hohe statische Spannungen aufgeladen werden. Wenn der Benutzer nun mit einem Körperteil in die Nähe der Anzeige gelangt, kann es zu Spannungsüberschlägen kommen, die die Anzeige beschädigen oder sogar zerstören können. Deshalb ist es aus dem Stand der Technik bekannt, zum Schutz der Anzeige einen Metallrahmen vorzusehen, der jedoch ein zusätzliches Bauteil bedeutet und aufwändig und teuer herzustellen ist. Aufgabe der Erfindung ist es daher, einen wirksamen elektromagnetischen Schutz anzugeben, der zudem preiswert und einfach aufgebaut ist.

Solche Anzeigen sind aus US 5 148 299 A bekannt, das Dokument zeigt alle Merkmale des Oberbegriffs von Anspruch 1.

Erfindungsgemäß wird die Aufgabe dadurch gelöst, dass mindestens eine der Scheiben der passiven Zelle mit einer transparenten, elektrisch leitenden Schicht versehen ist, die mit einem definiertem Potential, insbesondere dem Massepotential verbunden ist und, dass die elektrisch leitande Schicht teilweise unterbrochen ist.

So werden elektromagnetische Störungen, die die Anzeige verursacht, wirksam nach außen abgeschirmt. Gleichzeitig wird die Anzeige von Störungen von außen geschützt.

Eine Beschichtung aus ITO (Indium-Zinn-Oxid), weist eine gute Transparenz auf und ist nicht auffällig.

Die Verbindung der metallischen Schicht mit dem Massepotential kann besonders einfach durch einen Flexfolienleiter realisiert werden.

Eine besonders gute sichere Abschirmung kann dadurch realisiert werden, dass die Anzeige mit Ausnahme des von einem Beobachter wahrnehmbaren Anzeigebereichs von einem Gehäuse aus Metall oder metallisierten Material umgeben ist.

Die Erfindung wird nachfolgend anhand der Figuren näher erläutert. Es zeigen:

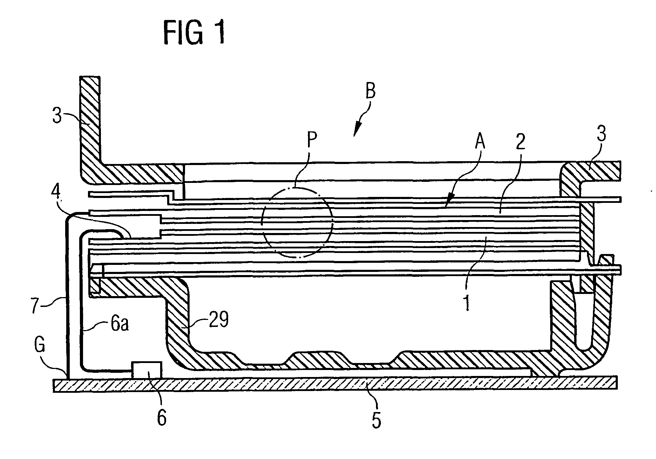

- Fig. 1:: einen Schnitt durch eine erfindungsgemäße DSTN-Anzeige;
- Fig. 2:: einen Teilschnitt P aus Fig. 1;
- Fig. 3:: einen Schnitt durch eine Ausführungsform mit einem metallischen Gehäuse.

Eine Anzeige A weist eine aktive Zelle 1 und eine passive Zelle 2 auf, wobei die passive Zelle 2 einem möglichen Beobachter B zugewandt ist. Die Anzeige A ist von einer Abdeckung 3 umgeben. Die aktive Zelle 1 ist über eine Verbindung 4 mit einer auf einer Leiterplatte 5 angeordneten Steuerschaltung 6 über eine Steuerleitung 6a elektrisch leitend verbunden. Die passive Zelle 2 ist über einen Flexfolienleiter 7 mit einem Massepotential G elektrisch leitend verbunden. Eine Lichtführung 29 dient zur Hinterleuchtung der Anzeige.

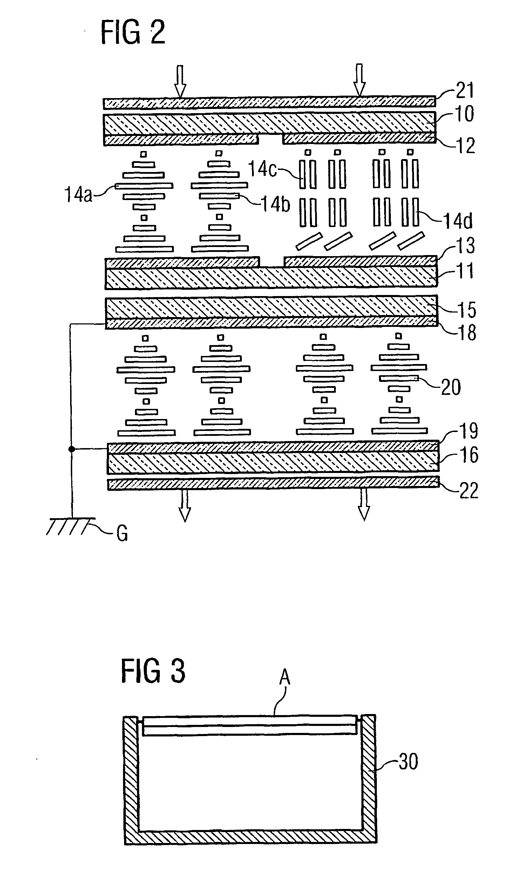

In Fig. 2 erkennt man den Aufbau der DSTN-Anzeige. Die aktive Zelle 1 weist zwei transparente Scheiben 10, 11 auf, auf denen jeweils Elektroden 12, 13 angeordnet sind. Zwischen den Elektroden 12, 13 befindet sich eine Flüssigkristallsubstanz 14. Die passive Zelle 2 weist ebenfalls zwei transparente Scheiben 15, 16 auf, die auf ihren Innenseiten jeweils eine transparente, elektrisch leitende Schicht 18, 19, vorzugsweise ITO (Indium-Zinn-Oxyd) bedeckt. Zwischen den elektrisch leitenden Schichten 18, 19 befindet sich eine Flüssigkristallsubstanz 20. Auf den Außenseiten der Scheiben 10, 16 ist jeweils ein Polfilter (20, 21) flächig aufgebracht, so dass zunächst unpolarisiertes Licht polarisiert in die aktive Zelle eindringen kann. Wenn keine Spannung anliegt, wie bei dem dargestellten Flüssigkristallen 14a, 14b, wird die Polarisationsebene des Lichtes um ca. 270° gedreht. Liegt eine Spannung an, wie rechts für die Flüssigkristalle 14c, 14d dargestellt wird, wird die Polarisationsebene des Lichtes in der aktiven Zelle nicht gedreht. Flüssigkristalle 20a - 20d der passiven Zelle liegen in keinem Spannungsfeld und drehen alle die Polarisationsebene des Lichtes um 270° in eine Drehrichtung, die der Drehrichtung der Flüssigkristalle 14a - 14d in einem nicht angesteuerten Zustand entgegengesetzt ist. So werden Farbeffekte kompensiert. Sofern die Elektroden 10, 12 angesteuert werden, kann das polarisierte Licht das Polfilter 22 durchdringen, wie durch den Pfeil a dargestellt wird.

In Fig. 3 erkennt man, dass die Anzeige A mit der Ausnahme des für den Betrachter B sichtbaren Bereichs von einem Gehäuse 30 aus Metall oder metallisierten Material umgeben ist. Das Gehäuse 30 ist elektrisch leitend mit den in Fig. 2 dargestellten elektrisch leitenden Schichten 18, 19 verbunden.

Die elektrisch leitende Schicht ist nicht vollständig flächig aufgebracht, sondern teilweise unterbrochen. Die Erfindung kann leicht modifiziert werden. So reicht es beispielsweise aus, nur eine der beiden elektrisch leitenden Schichten 18, 19 vorzusehen.

## Patentansprüche

1. DSTN-Anzeige mit einem elektromagnetischen Schutz, mit einer aktiven Zelle (1) und einer passiven Zelle (2), wobei die aktive Zelle (1) Elektroden (12, 13) aufweist und die passive Zelle (2) einem Betrachter der Anzeige zugewandt ist, die passive Zelle (2) eine elektrisch leitende transparente Schicht (18, 19) aufweist und die elektrisch leitende Schicht (18, 19) mit einem definierten Potential, insbesondere dem Massepotential (G) elektrisch leitend verbunden ist, **dadurch gekennzeichnet, daß** die elektrisch leitende Schicht (18, 19) teilweise unterbrochen ist.

2. Anzeige nach Anspruch 1, **dadurch gekennzeichnet, dass** die transparente Schicht (18, 19) aus Indium-Zinn-Oxyd besteht.

3. Anzeige einem der vorstehenden Ansprüche, **dadurch gekennzeichnet, dass** die metallische Schicht (18, 19) über einen Flexfolienleiter (7) mit dem definierten Potential, insbesondere dem Massepotential (G) verbunden ist.

4. Anzeige nach einem der vorstehenden Ansprüche, **dadurch gekennzeichnet, dass** die Anzeige (A) an ihrer Seite und ihrer Rückseite mit einem metallischen Gehäuse (30) umgeben ist, und dass die metallische Schicht (18, 19) der Anzeige elektrisch leitend mit dem Gehäuse (30) verbunden ist.

## Claims

1. DSTN display with electromagnetic protection, comprising an active cell (1) and a passive cell (2), the active cell (1) having electrodes (12, 13) and the passive cell (2) facing an observer of the display, the passive cell (2) having an electrically conductive transparent layer (18, 19), and the electrically conductive layer (18, 19) being electrically conductively connected to a defined potential, in particular the earth potential (G), **characterized in that** the electrically conductive layer (18, 19) is partly interrupted.

2. Display according to Claim 1, **characterized in that** the transparent layer (18, 19) is composed of indium tin oxide.

3. Display according to one of the preceding claims, **characterized in that** the metallic layer (18, 19) is connected to the defined potential, in particular the earth potential (G), via a flexible sheet conductor (7).

4. Display according to one of the preceding claims, **characterized in that** the display (A) is surrounded with a metallic housing (30) at its side and its rear side, and **in that** the metallic layer (18, 19) of the display is electrically conductively connected to the housing (30).

## Revendications

1. Ecran dit à matrice passive ou écran DSTN (pour "dual-scan twisted nematic", en anglais) comportant une protection électromagnétique, avec une cellule active (1) et une cellule passive (2), où la cellule active (1) a des électrodes (12, 13) et la cellule passive (2) est tournée vers un observateur de l'écran, où la cellule passive (2) a une couche transparente (18, 19) conduisant l'électricité et où la couche (18, 19) conduisant l'électricité est reliée électriquement à un potentiel défini, notamment, au potentiel de la masse (G), **caractérisé par le fait que** la couche (18, 19) conduisant l'électricité est partiellement interrompue.

2. Ecran selon la revendication 1 **caractérisé par le fait que** la couche transparente (18, 19) est en oxyde d'étain et d'indium.

3. Ecran selon l'une des revendications précédentes **caractérisé par le fait que** la couche métallique (18, 19) est reliée par l'intermédiaire d'un conducteur à membrane flexible (7) au potentiel défini, notamment, au potentiel de la masse (G).

4. Ecran selon l'une des revendications précédentes **caractérisé par le fait que** l'écran (A) est entouré, sur son côté latéral et sur son côté arrière, par un boîtier métallique (30) et que la couche métallique (18, 19) de l'écran est reliée électriquement au boîtier (30).
